# EUROPEAN PATENT SPECIFICATION

(11) **EP 3 864 094 B1**
(45) Date of publication and mention of the grant of the patent: **06.12.2023**
(21) Application number: 19786328.5
(22) Date of filing: 10.10.2019
(51) Int. Cl.: C09D 5/00

(54) **TWO-PACK EPOXY PAINTS WITH IMPROVED CORROSION PROTECTION**
ZWEIKOMPONENTEN-EPOXIDLACKE MIT VERBESSERTEM KORROSIONSSCHUTZ
PEINTURES ÉPOXY À DEUX COMPOSANTS PRÉSENTANT UNE MEILLEURE PROTECTION CONTRE LA CORROSION

(30) Priority: 12.10.2018 EP 18200183
(43) Date of publication of application: 18.08.2021
(73) Proprietor: Allnex Austria GmbH, 8402 Werndorf (AT)
(72) Inventor: HOBISCH, Gerald, 8075 Hart bei Graz (AT); FEOLA, Roland, 8052 Graz (AT); BERNSTEINER, Iris, 8045 Graz (AT)
(74) Representative: Boon, Greet
(86) International application number: PCT/EP2019/077444
(87) International publication number: WO 2020/074627

(56) References cited:
- US-A1- 2006 247 341
- US-A1- 2010 092 664

## Description

This invention is directed to two-pack epoxy paints with improved corrosion protection, to a process for their preparation, and to a method of using these to protect substrates against corrosion.

Most metals, with the exception of noble metals or those metals that form coherent oxide layers such as aluminium, are provided with coating films when exposed to ambient conditions to prevent, or at least retard, corrosion. Application of a coating film onto a metal surface provides a barrier between the metal substrate and a damaging environment if there is sufficient adhesion of the coating film to the metal substrate, and if the permeability of the coating film for oxygen and water is low. Among coating films, paints in liquid form or powder form play an important role. An aspect which has to be considered when selecting a coating material is avoiding of constituents in the coating composition that can react with the metal surface, and thus possibly damage the metal substrate, for example chloride ions which may provide a seed for future corrosive attack. Many organic polymers are suitable for forming coating films on a metal surface. It is desired that these films have a sufficient hardness, sufficient adhesion as pointed out supra, and also sufficient elasticity to enable the coating film to follow possible deformations of the coated metal items.

US 2010/0092664 A1 relates to a two-part, self-curing, low viscosity acrylic coating composition. The composition includes a first component composition of (i) an effective amount of one or more low molecular weight, low viscosity cross linkable molecules with mono, di or multifunctional acrylic, vinyl ether or methacrylic functionality; (ii) one or more hydrophobic free radical polymerizing agent; (iii) a polymerizing catalyst; (iv) a polymerization catalyst which may be a combination of one or more photoinitiators and one or more metal containing catalysts; and (vi) an adhesion coupling agent. The second component of the composition includes (i) an effective oxygenating acrylic cross linking agent; and (ii) a curing agent which contains polymerizable functional groups such as allylic, acrylic and or methacrylic. The application of such low molecular weight, low viscosity cross linkable monomers or polymers provides a protective coating to concrete or may also be used to penetrate and coat metal surfaces, regardless of whether corroded or not, and seal the surface of the metal substrate and stop the corrosion process and provide for a smooth, workable surface that may be painted or otherwise treated.

US 2006/0247341 A1 is directed to organometallic complexes as catalysts for the reaction of compounds with isocyanate and hydroxyl functional groups to form urethane and/or polyurethane and the process employing such catalysts. More particularly, it is directed to complexes zinc(II) with substituted amidines. The document further relates to a method of catalyzing the process for de-blocking blocked isocyanates, like ketoxime, pyrazole or phenol blocked products to form crosslinked coatings. More particularly, it relates to the use of certain complexes zinc (II) with substituted amidines that are effective in catalyzing both a solvent borne and a waterborne process to form such crosslinked coatings. The document also relates to polyurethane powder coating compositions which are curable at low stoving temperatures and to their use for coating heat-resistant substrates. The document is also directed to a catalyst for the epoxy reaction with carboxyl, anhydride, dicyandiamide (DICY), or phenolic compounds for use in coating, sealant, adhesive and casting applications.

Epoxy resins are one of the most-used materials in the formulation of corrosion-protection paints. Water-borne two-pack epoxy paints based on epoxy resins and hardeners therefor are preferred as they do not need organic solvents and therefore have a low VOC, and combine high molar mass resins with a high mass fraction of solids with low viscosity, due to their dispersion form.

The corrosion protection of epoxy coatings for steel substrates can be further improved by addition of metallic zinc powder, in the so-called "zinc-rich primers", which provide a so-called "cathodic protection". As the metallic zinc is consumed in a corrosive environment, these coatings have a limited lifetime. The metal powder loading, however, impairs the physical properties of the coating, particularly the impact resistance of the coating. Moreover, during welding or gas-cutting when doing repair work on coated substrates, zinc oxide fumes are generated which present a health hazard.

It was the aim of the development upon which the present invention is based, to develop an epoxy coating with improved corrosion resistance, and good impact resistance, that does not comprise metallic zinc powder.

It was found that addition of zinc salts of aliphatic organic acids, particularly aliphatic carboxylic acids, to a two-pack epoxy resin binder formulation leads to a significant improvement of anti-corrosion properties.

In the context of the present description, organic acids refer to carboxylic acids, acids from organophosphorous compounds (such as phosphoric acid, phosphonic acid, phosphinic acid), and acids from organosulfur compounds (such as sulfonic acid). More particularly, in the context of the present description, aliphatic organic acids (also referred to as organic aliphatic acids) refer to acids comprising (on their aliphatic chain) at least one acid group selected from the group consisting of a carboxylic acid group (-COOH), a phosphonic acid group (-PO(OH)₂), a phosphinic acid group (>PO(OH)), a phosphoric acid group (-O-PO(OH)₂), and a sulfonic acid group (-S(O)₂OH).

The invention therefore relates to a two-pack coating composition comprising an epoxy resin E component and a hardener H component therefor, and additionally at least one zinc salt **Z** of an organic aliphatic acid **A** (to enhance anti-corrosion properties of the final coating film).

The zinc salts **Z** according to the invention are preferably salts of divalent zinc and aliphatic organic acids **A** having (on their aliphatic chain) at least one acid group which is preferably selected from the group consisting of a carboxylic acid group, -COOH, a phosphonic acid group -PO(OH)₂, a phosphinic acid group >PO(OH), and a phosphoric acid group -O-PO(OH)₂. The aliphatic group is preferably a linear or branched alkyl group having up to forty carbon atoms, more preferably from six to eighteen carbon atoms. Preferably, the organic aliphatic acid is a monofunctional carboxylic acid.

The zinc salt **Z** is preferably a zinc salt of a monofunctional linear or branched carboxylic acid having up to twenty carbon atoms, particularly preferably selected from the group consisting of 2-ethylhexanoic acid, n-octanoic acid, n-decanoic acid (capric acid), 8-methyl-nonanoic acid, and neodecanoic acid (a mixture of 2,2,3,5-tetramethylhexanoic acid, 2,4-dimethyl-2-isopropylpentanoic acid, 2,5-dimethyl-2-ethylhexanoic acid, 2,2-dimethyloctanoic acid, 2,2-diethylhexanoic acid, and minor quantities of other isomers). Zn salts of longer chain aliphatic acids such as stearic acid, palmitic acid, isostearic acid, isopalmitic acid, and other naturally occurring or synthetic fatty acids having from twelve of eighteen carbon atoms can also be used. The composition according to the invention can contain more than one zinc salt Z.

The zinc salts **Z** may be prepared from zinc oxide which is added to the molten acid under stirring at a temperature of from 110 °C to 160 °C for a time between fifty and ninety minutes until the solid zinc oxide is dissolved under reaction with the acid. The salt can then be diluted with a solvent to facilitate its handling.

The zinc salt **Z** can be added to the epoxy resin component or to the hardener component of the two-pack coating composition.

The quantity of zinc salt present in the composition is preferably such that the mass fraction of Zn to the total mass of epoxy resin E (solid) and hardener H (solid) is from 0.01 to 10 %, more preferably from 0.02 to 2 %.

The coating composition according to the present invention is preferably in the form of an aqueous dispersion.

The epoxy resin E component of the coating composition is preferably in the form of an aqueous dispersion. Aqueous dispersions of epoxy resins are well known and are for example commercially available under the tradenames of BECKOPOX^{®}EP384w/53WAMP and BECKOPOX^{®}EP387w/53WA.

Preferred epoxy resins are hydrophilic modified epoxy resins, especially by introduction of non-ionic hydrophilic moieties. The reason is that the commonly used ionic hydrophilising groups such as amino groups or acid groups which form ions in aqueous environment are reactive themselves with epoxide groups. Introduction of the commonly used poly(oxyethylene) blocks as hydrophilicising moiety is a difficult step as strong acid catalysts, mostly Lewis acids such as boron trifluoride, or complexes thereof with ethers or amines, have to be used, and the process is difficult to control. Such chemistry has been described in US 4,886,845 and US 4,987,163. Preferred aqueous dispersions of epoxy resins **E** are self-emulsified resin dispersions where the epoxy resin is modified by reaction with modifiers comprising oxyalkylene groups, preferably oligomeric or polymeric oxyethylene moieties as hydrophilic constituents, and functional groups that can take part in an advancement reaction between low molar mass polymeric epoxy resins or oligomeric epoxy resins, and aromatic hydroxyl group-containing compounds, preferably between bisphenol A diglycidylether and bisphenol A, or similar compounds usually used in the synthesis of epoxy resin paints. Examples of such aqueous dispersions of epoxy resins have for example been described in US 4,886,845 and US 4,987,163.

The epoxy resin E used in the present invention preferably has an epoxy equivalent weight of 100 to 2000, more preferably of 100 to 1500, especially of 150 to 700. The epoxy equivalent weight of the epoxy resin is determined as the grams of epoxy resin (solid) equivalent to 1 mol of epoxy groups.

The total amount of epoxy resin E in the composition is preferably in the range of 15 to 90 %, more preferably from 50 to 80 % by weight of the total solids of epoxy resin E, hardener H and zinc salt Z.

The hardener H used in the present invention is preferably an amine based hardener (also designated as curing agent). Such hardeners for epoxy resins usually have primary, secondary, or also tertiary, amino groups that react with an epoxide group under formation of a beta-hydroxy amine structure or a betaine structure. The curing activity decreases from primary to secondary to tertiary amines. While it is possible to use multifunctional primary amines which are the most efficient amines due to their higher reaction rate, such as isophorone diamine or metaxylylene diamine, as curing agents for epoxide-functional compounds, their high vapour pressure and unfavourable smell together with potential health hazard has barred their use in applications where no sufficient ventilation is available. Moreover, lack of compatibility of monomeric amines with epoxy resins has limited their usefulness. Secondary amines which stem from reaction of primary amines with epoxide-functional compounds have good compatibility with epoxy resins, yet suffer from lower curing speed compared to that of primary amines. Water-dispersible curing agents based on reaction products of amines and epoxide-functional compounds which have primary amino groups have been disclosed, i. a., in US 9,440,911, where internally emulsified water-dispersible curing agents are described, and in US 9,914,800, where externally emulsified water-dispersible curing agents are described. With these water-dispersible curing agents, it is possible to use either hydrophilically modified epoxy resins, or standard liquid epoxy resins or type **I** solid epoxy resins which are emulsified by the water-dispersible curing agents themselves to make a two pack water-based epoxy paint, and to profit from the fast curing speed provided by primary amino groups.

The hardener component used in the present invention is preferably in the form of an aqueous dispersion. Aqueous dispersions of epoxy hardeners are known in the prior art and have for example been commercialized under the tradenames of BECKOCURE^{®}EH2260w/41 WA. Preferred hardeners used in the composition according to the invention are amino-functional epoxy-amine adducts, especially those having primary amino groups. Most preferred water-borne hardeners **H** are aqueously dispersible epoxy-amine adducts such as those described in the patents US 4,197,389, US 9,440,911 and US 9,914,800, although also other water-borne hardeners or curing agents such as those derived from polyalkyleneglycol polyamines, amidoamines, polyamides, Mannich bases, phenalkamines and phenalkamides can also be used. These hardeners are preferably hydrophilically modified, but can also be dispersed in water using surfactants which are preferably non-ionic surfactants.

The hardener H used in the present invention preferably has an hydrogen equivalent of 50 to 1500, more preferable from 80 to 1000. The hydrogen equivalent of the hardener is determined a grams of curing agent H (solid) equivalent to 1 mol of active hydrogen linked to nitrogen.

The amount of hardener H in the composition according to the invention is preferably such that the ratio between hydrogen equivalents and epoxy equivalents is in the range of 20:100 to 120:100, more preferably from 30:100 to 90:100 and most preferably from 40:100 to 70:100.

The total amount of hardener H in the composition is preferably in the range of 10 to 60 %, more preferably from 20 to 50 % by weight of the total solids of epoxy resin E, hardener H and zinc salt Z.

The zinc salts **Z** can be added in the coating composition according to either or any of the following embodiments or combinations thereof:
- as part of the epoxy resin E component, preferably as part of a water-borne epoxy resin dispersion. In this case the zinc salt Z or part of the zinc salt Z is preferably added to the epoxy resin E prior to the emulsification of the epoxy resin,
- as part of the hardener component, preferably as part of a water-borne epoxy-amine based hardener **H.** In this case the zinc salt Z or part of the zinc salt Z is preferably added to the hardener prior to the emulsification of said hardener H, and
- during formulation.

According to a preferred embodiment, at least part of the zinc salt Z is added as part of the epoxy resin component of the coating composition.

The present invention therefore also relates to a waterborne epoxy resin component comprising at least one epoxy resin E as described here above and at least one zinc salt Z as described here above. Said waterborne epoxy resin component is preferable obtained by a process wherein an epoxy compound containing at least two epoxy groups and having an epoxy equivalent of 100 to 2000 is reacted with a polyhydric phenol and the condensation product of an aliphatic polyol, followed by the addition of at least part of the zinc salt Z and appropriate quantities of water to prepare the dispersion containing the epoxy resin E and the zinc salt Z. Preferably, the zinc salt Z is added to the epoxy resin E component during the preparation of said epoxy resin E component before the dispersion of the epoxy resin E in water.

The quantity of zinc salt present in the epoxy resin component is preferably such that the mass fraction of Zn to the total mass of epoxy resin E (solid) is from 0.01 to 10 %, more preferably from 0.02 to 5 %, and most preferably from 0.02 to 4 %.

According to another, even more preferred, embodiment, at least part of the zinc salt Z is added as part of the hardener H component of the coating composition. In this embodiment, the hardener is preferably an aqueously dispersible epoxy-amine adduct such as those described in the patents US 9,440,911 and US 9,914,800. The hardener component is preferably obtained by a process wherein, in the first step, of an amino functional compound AB having blocked primary amino groups through reaction of an amine A having at least one primary amino group per molecule, and at least secondary one amino group >NH is reacted with a blocking agent B for the primary amino groups, preferably an aldehyde or a ketone, to form a compound which does not have residual primary amino groups, preferably, a Schiff base which may be an aldimine or ketimine, and, in a second step, the amino functional compound AB having blocked primary amino groups is reacted with an epoxy functional compound C, and which is preferably also hydrophilic, to form an amino-functional compound ABC which has blocked primary amino groups, and, in a third step removing the blocking agent B from the compound ABC by heating or by addition of a deblocking compound D which liberates the blocked primary amino group to form the amine AC, in a forth step, dispersing said amine AC in water together of before adding with at least part of the zinc salt Z, and optionally further adding a mono-functional epoxy compound. Preferably the zinc salt Z is added to the hardener component during the preparation of said hardener H component before the dispersion of the hardener H in water.

The quantity of zinc salt present in the hardener component is preferably such that the mass fraction of Zn to the total mass of hardener H (solid) is from 0.01 to 10 %, more preferably from 0.02 to 5 %, and most preferably from 0.02 to 4 %.

According to another embodiment, part of the zinc salt is added to the epoxy resin component and/or to the hardener component and part of the zinc salt is added to the final formulation.

The composition according to the invention is advantageously used as a binder in paint or coating formulations. The paint or coating formulation usually contains one or more other additives usually used in such composition, such as inorganic or organic pigments, functional pigments, fillers such as talc, wetting agents, defoamers, antisettling agents, viscosity modifiers, coalescing agents, and UV absorbers.

The paints or coating formulations comprising the composition according to the present invention are particularly useful for anti-corrosion coating of metals.

Formulation of such paint is usually carried out by preparation of a pigment slurry in the step a), where a first group of additives is added to deionised water, preferably comprising dispersing and pigment wetting additives, and defoamers, followed by step b) where fillers, pigments, and further fillers or extenders are added one after the other, again followed by step c) where further additives can be added such as further defoamer, optionally, a solvent to lower the minimum film forming temperature, as well as rheology modifiers, and substrate wetting additives. The zinc salt **Z** can be added in any of these steps a), b), and c). Step a) is preferably conducted in a mixer, step b) is preferably conducted in a bead mill to effectively homogenise the pigments which are solid constituents. Addition of the further additives or solvents in step c) is also conducted in the bead mill. In a next step d), the epoxy resin E component, preferably under the form of an aqueous dispersion of the epoxy resin E is added to obtain a pigmented water-borne epoxy resin formulation.

In the last mixing step e) the hardener H component which is preferably a reaction product of epoxide-functional compounds and amines, usually referred to as epoxy-amine adducts, is then added before applying the paint or formulation to the substrate.

It has been found, in the course of the investigations leading to the present invention, that the zinc salts Z according to the invention improve the corrosion protection properties of water-based, solvent-based powder-based epoxy paints which are made from solid or liquid epoxy resins, hardeners or curatives therefor, and optionally, reactive diluents.

The present invention therefore also relates to the use and a method of use of the composition according to the invention for coating of substrates, especially metal substrates, preferably a base metal and more preferably steel such as cold rolled steel and phosphate steel, to protect the substrate from corrosion.

The invention is further illustrated in the following examples.

### Examples

In the specification, and also in the examples, the following parameters have been used to describe physicochemical properties of the compounds and substances:
The mass fraction of solids *w*ₛ was determined by drying a sample B which comprises a substance which is solid at room temperature (23 °C) and is dissolved in a solvent, or dispersed in an aqueous system, with the sample mass of 1 g at 125 El for one hour, and stating the ratio *w*ₛ = *m*_{Rd} / *m*_{B} of the mass *m*_{Rd} of the residue Rd after drying, and the mass *m*_{B} of the sample B taken. Strength of a solution is stated as the mass fraction *w*_{B} of solute B in the solution, calculated as the ratio *m*_{B} / *m*_{S} of the mass *m*_{B} of solute B and the mass *m*_{S} of solution S.

The specific amount of substance of epoxide groups in a sample was determined in the usual way by titration of the sample with tetraethylammonium bromide and perchloric acid in glacial acetic acid, as described by R. R. Jay, Anal. Chem. 36, (1964), pages 667 and 668, and stated as the ratio *n*(EP) / *m*_{B} of the amount of substance *n*(EP) of epoxide groups present in a sample B, and the mass *m*_{B} of that sample B; its customary SI unit is "mol/kg". In solutions or aqueous dispersions, the mass of solids in the sample is generally used for this calculation, unless specifically mentioned otherwise.

The specific amount of substance of amine hydrogen atoms is defined as the ratio *n*(NH) / *m*_{B} of the amount of substance *n*(NH) of aminic hydrogen atoms present in a sample B, and the mass *m*_{B} of that sample B; its customary SI unit is "mol/kg". In solutions or aqueous dispersions, the mass of solids in the sample is generally used for this calculation, unless specifically mentioned otherwise.

Dynamic viscosity *η* of the dispersion was measured in a cone-and-plate rheometer at 23°C and a shear rate of 100 s⁻¹.

### Example 1 : Preparation of a zinc-carboxylate containing water-borne epoxy resin dispersion

In presence of 27 g of an emulsifier component based on example I.15 of EP 0 272 595 A2, a type I solid epoxy resin was made from 325 g of bisphenol A diglycidylether and 98 g of bisphenol A according to Example III.1 of EP 0 272 595 A2. After reaching the desired specific amount of substance of epoxide groups of 2.04 mol/kg (based on the mass of solid, i. e. undiluted, resin; corresponding to an "Epoxy Equivalent Weight (EEW)" of 490 g/mol), 28.5 g of methoxy-propanol and 13.9 g of a solution of zinc-neodecanoate (Borchi^{®} Kat 0761, having a mass fraction of 15 % of Zn in a solution with a fatty acid ester solvent) was added. After homogenisation, the mixture was emulsified in water to obtain a dispersion having a mass fraction of solids of 60.1 %, a specific amount of substance of epoxide groups of 1.86 mol/kg (based on the mass of solids in the dispersion, corresponding to an EEW of 538 g/mol), a dynamic viscosity of 832 mPa·s, measured at 23°C and a shear rate of 100 s⁻¹, and a mass fraction of Zn of 0.45 % in the dispersion.

### Example 2 : preparation of a water-borne epoxy resin dispersion without addition of zinc carboxylate

A reference sample has been produced by following the same procedure as in example 1 without adding any zinc carboxylate.

The properties of the dispersions obtained are summarised in Table 1.

**Table 1**

| Dispersion of Example | 1 | 2 |
|---|---|---|
| Mass Fraction of Solids | 60.1 % | 60.3 % |
| Specific Amount of Substance of Epoxide Groups | 1.859 mol/kg | 1.938 mol/kg |
| Epoxy Equivalent Weight EEW (on solids) | 538 g/mol | 516 g/mol |
| Epoxy Equivalent Weight EEW (on form of delivery) | 895 g/mol | 856 g/mol |
| Dynamic Viscosity | 832 mPa·s | 896 mPa·s |
| Mass Fraction of Zinc in the Dispersion | 0.45 % | 0 |
| Mass fraction of Zn on solid epoxy | 0.75 % | 0 |

### Example 3 : Preparation of a zinc carboxylate containing water-borne amine hardener

### 3.1 Ketimine

A ketimine K1 was prepared by charging 103 g (1 mol) of diethylenetriamine (DETA) and 300 g (3 mol) of methylisobutylketone (MIBK) into a four-necked flask equipped with a mechanical stirrer, a Dean Stark trap, and a gas inlet, and heating to reflux for eight hours under a nitrogen flow. When no more water was collected, the excess MIBK was removed to yield the pure DETA-MIBK-ketimine.

### 3.2 Epoxy-Amine Adduct

An epoxy amine adduct was prepared by charging 2546 g of bisphenol A diglycidyl ether (BADGE), 450 g of polyethylene glycol with an average molar mass of 1500 g/mol, and 941 g of methoxypropanol into a four-necked flask equipped with a mechanical stirrer and heating to 100°C under stirring. When this temperature was reached, 3 g of borontrifluoride amine were charged into the flask and the mixture was heated to 130°C and maintained at this temperature for two hours until a specific content of epoxide groups of 3.24 mol/kg was reached. The reaction mixture was then cooled to 100°C, and 776 g of bisphenol A and 3 g of triphenylphosphine were charged into the reaction flask. The reaction mixture was then heated again under stirring to 130°C, and was kept at this temperature for two hours until the specific content of epoxide groups in the reaction mixture had reached 1.27 mol/kg. Then, 380 g of methoxypropanol were added, and the reaction mixture was cooled to 80°C. At this temperature, 1335 g of the ketimine K1 of Example 3.1 were added, and the mixture was stirred for twenty minutes. The mixture was then heated to 90°C, 84 g of diethanolamine were added under stirring, and the mixture was held for twenty minutes at 90°C. 10.2 g of dimethylaminopropylamine were then added, and the reaction mixture was heated to 100°C and stirred for two hours. 95 g of BADGE were added to scavenge unreacted free amines, and the mixture was stirred at 100°C for one further hour. After cooling to room temperature (23 X2), the mass fraction of solids was determined to be 80 %, and the dynamic viscosity measured at 23°C and a shear rate of 25 s⁻¹ was 5000 mPa.s.

### 3.3 Deblocking and Dispersion

6624 g of the epoxy amino adduct thus prepared were heated to 95 X2 and neutralised with 429 g of a 50 % strength solution of lactic acid in water followed by the addition of 6700 g of water. The solvents methoxypropanol and MIBK were distilled off under reduced pressure of 100 hPa at 60°C. When the distillation of solvent had ceased, 276 g of zinc octoate (Octa-Soligen ^{®} Zinc 23: Borchers GmbH, Langenfeld having a mass fraction of zinc of 23 %) and 821 g of cresyl glycidyl ether were added to the dispersion, and the mixture was stirred for two hours. The mass fraction of solids of the dispersion was adjusted by addition of water to 41.2 %. The viscosity of the dispersion was 1163 mPa.s at 23°C and a shear rate of 100 s⁻¹, the specific amount of substance of amine hydrogen atoms in the dispersion was 1.0 mol/kg.

### Example 4 : Preparation of a water-borne amine hardener without addition of zinc carboxylate

The procedure of Example 3 was followed, without addition of the zinc octoate.

The properties of the hardener dispersions are summarised in Table 2.

**Table 2**

| Hardener of Example | 3 | 4 |
|---|---|---|
| Mass Fraction of Solids | 41.2 % | 40.9 % |
| Specific Amount of Amine Hydrogen Atoms (based on the mass of the dispersion) | 1 mol/kg | 1 mol/kg |
| Hydrogen equivalent weight (solid) | 412 g/mol | 409 g/mol |
| H-Equivalent Weight (calculated on form of delivery) | 1000 g/mol | 1000 g/mol |
| Dynamic Viscosity (23°C SR 100) | 1163 mPa·s | 1038 mPa·s |
| Zinc content (on solid hardener .) | 0,92% | 0 |

### Example 5 Paint Formulation

A pigment slurry was prepared from the constituents as listed in Table 3. These materials were added in the sequence of the groups shown (i. e. first group A, the group B, and lastly, group C), and within the groups, in the sequence of the rows in the table).

**Table 3 Ingredients of the Pigment Slurry**

| | Ingredient | mass in g | Mass Fraction of Solids in the Ingredient in % |
|---|---|---|---|
| A | Deionised Water | 1405 | 0 |
| A | ADDITOL^{®} VXW 6208 ⁵ | 477 | 50 |
| A | ADDITOL^{®} VXW 6393 ⁵ | 3 | 100 |
| B | Sillitin^{®} Z89 ¹ | 914 | 100 |
| B | Kronos^{®} 2190 ² | 356 | 100 |
| B | Bayferrox^{®} 3920 ³ | 93 | 100 |
| B | Bayferrox^{®} 306 ³ | 203 | 100 |
| B | Barium sulfate EWO ⁴ | 305 | 100 |
| C | ADDITOL^{®} VXW 6393 ⁵ | 4 | 100 |
| C | Texanol^{®} solvent | 108 | 0 |
| C | ADDITOL^{®} VXW 6388 ⁵ | 8 | 35 |
| C | ADDITOL^{®} VXW 6503N ⁵ | 4 | 50 |
| | | 10000 | 8176 |

| | | | |
|---|---|---|---|
| 1 Sillitin Z89: combination of corpuscular silica and lamellar kaolinite, Hoffmann Mineral GmbH, Neuburg 2 Kronos 2190: Al/Zr stabilised titanium dioxide pigment, relative scattering power according to DIN 53165: 103; oil absorption according to ASTM 767/5: 18 g/(100 g): Kronos International Inc., Leverkusen 3 Bayferrox 3920: micronised iron oxide yellow, Colour index 77492; 306: iron oxide black, Colour Index 77499; LANXESS Deutschland GmbH, Köln 4 EWO white baryte, brightness *R*_{y} 92, *d*₅₀ 3.5 µm; Sachtleben Minerals GmbH&Co. KG, Hausach 5 ADDITOL VXW 6208: polymeric nonionic dispersing additive; ADDITOL VXW 6393: mineral oil defoamer, silicon-free; ADDITOL VXW 6388: polyurethane thickener; ADDITOL VXW 6503 N: levelling and substrate wetting additive, polyether modified polysiloxane; Allnex | | | |

This slurry was used to prepare the paints PA (comparative) and P1, P2 and P3 (according to the invention) by mixing components of part A in the mentioned order, adding the components of part B under slow stirring, and dispersing for 15 minutes in a bead mill until the desired grinding fineness (particle size below 10 µm) was reached, and then adding components of part C in the mentioned order under moderate stirring. This slurry was then mixed with the epoxy resin dispersions of examples 1 or 2. For paint P1, zinc octoate (Octa-Soligen ^{®} Zinc 23, mass fraction of zinc: 23 %; Borchers GmbH, Langenfeld) was added to the mixture of pigment slurry and epoxy resin dispersion.

Coating compositions were made by first preparing Part A and Part B separately and then mixing both and homogenize them and if necessary adjusting the viscosity in the range of 500 - 600 mPa.s by addition of water according application needs.

**Table 4 Paint Formulation**

| Paint Formulation (in grams) | PA | P1 | P2 | P3 |
|---|---|---|---|---|
| Part A | | | | |
| Pigment Slurry of Table 3 | 75,4 | 75,4 | 75,4 | 75,4 |
| Epoxy Resin Dispersion of Example 2 | 57,5 | 57,5 | | 57,5 |
| Epoxy Resin Dispersion of Example 1 | | | 57,5 | |
| Zinc-octoate | | 1,35 | | |

| Part B | | | | |
|---|---|---|---|---|
| Amine Hardener of Example 4 | 35,5 | 35,5 | 35,5 | |
| Amine Hardener of Example 3 | | | | 35,5 |
| | | | | |
| Crosslinking (ratio between hydrogen equivalents of hardener and epoxy equivalents of epoxy resin) | 0.5 | 0.5 | 0.5 | 0.5 |
| Mass Ratio of Pigment to Binder | 1,2/1 | 1,2/1 | 1,2/1 | 1,2/1 |
| Solids content (in the mixture of parts A+B) | 65,74 % | 66,02 % | 65,74 % | 65,74 % |
| | | | | |
| Mass fraction of Zinc *m*(Zn) / *m*(solids) in % | 0 | 0,28 | 0,23 | 0,3 |

The paints were applied at room temperature by spray (airmix) on cold rolled steel (Gardobond OC - CRS) and sandblasted steel substrates at a target DFT (dry film thickness) of 50-60µm on CRS and 70-90µm on sandblasted steel.

The coated substrates were stored (dried) during 7 days at 23°C and 50% rel. humidity.

### Anticorrosion Tests

The results of the salt-fog test (Salt Spray Test according to DIN EN ISO 9227, 1mm scratch) and humidity chamber test (Humidity Chamber Test ISO 6270-2) conducted after 7 days at 23°C and 50% rel. humidity storage are presented in Table 5. The exposure time was 840 hrs.

**Table 5**

| Paint | | | PA | P1 | P2 | P3 |
|---|---|---|---|---|---|---|
| | Substrate | Parameter | | | | |
| Salt-fog Test | Gardobond OC | D.F.T. [µm] | 55 - 70 | 50 - 60 | 55-65 | 50 -60 |
| | | Creep [mm] | 35 - 45 | 9 - 15 | 8 - 18 | 7 - 15 |
| | Sandblasted | D.F.T. [µm] | 75 - 90 | 75 - 90 | 80 -90 | 80 - 90 |
| | | Creep [mm] | 12 - 18 | 5 - 8 | 4 - 8 | 4 - 6 |
| Humidity Chamber | Gardobond OC | Blistering B | 5 S4 | few S1 | few S1 | few S1 |
| | Sandblasted | Blistering B | 5 S3 | no | Some S0-1 | no |

The results (creep and blistering) show that the compositions according to the present invention comprising a specific zinc salt present a better anti-corrosion resistance.

## Claims

1. A two-pack coating composition comprising an epoxy resin E component having an epoxy equivalent weight of 100 to 2000, the epoxy equivalent weight of the epoxy resin being determined as the grams of epoxy resin (solid) equivalent to 1 mol of epoxy groups, and an amine based hardener H component therefor, **characterised in that** the composition additionally comprises at least one zinc salt of an organic aliphatic acid **Z.**

2. The composition of claim 1, **characterised in that** it is in the form of an aqueous dispersion.

3. The composition of claim 1, **characterised in that** the epoxy resin E component or/and the hardener H component is in the form of an aqueous dispersion.

4. The composition of any one of claims 1 to 3 wherein the zinc salt **Z** is a salt of an organic aliphatic acid wherein the acid groups are selected from the group consisting of carboxylic acid groups, phosphonic acid groups, phosphinic acid groups, and phosphoric acid groups.

5. The composition of claim 4 wherein the aliphatic group is a linear or branched alkyl group having up to forty carbon atoms.

6. The composition of claim 4 or 5 where the organic aliphatic acid is a monofunctional carboxylic acid.

7. The composition of claim 4 wherein the zinc salt **Z** is a zinc salt of acids selected from the group consisting of 2-ethylhexanoic acid, n-octanoic acid, n-decanoic acid, 8-methyl-nonanoic acid, and neodecanoic acid.

8. The composition according to any of claims 1 to 7 wherein the quantity of zinc salt in the composition is such that the mass fraction of Zn to the total mass of epoxy resin E (solid) and hardener H (solid) is from 0.01 to 10 %, preferably from 0.02 to 2 %.

9. The composition of any of claims 1 to 8 wherein the mass fraction of Zn in the epoxy resin E component or/and in the hardener H component is from 0.01 to 10 %, preferably from 0.02 to 5 %, and more preferably, from 0.02 % to 4 %.

10. The composition of any of claims 1 to 9 wherein the hardener H is an amino-functional epoxy-amine adduct.

11. The composition of claim 10 wherein the hardener H is an amino-functional epoxy-amine adduct having primary amino groups.

12. A process for the preparation of the composition according to any of claims 1 to 11, wherein a zinc salt **Z** of an organic aliphatic acid is added to the epoxy resin E component or/and to the hardener H component prior to the formulation of the coating composition.

13. The process of claim 12, wherein the zinc salt Z is added to the epoxy resin E component during the preparation of said epoxy resin E component before the dispersion of the epoxy resin E in water.

14. The process of claim 12 or 13, wherein the zinc salt Z is added to the hardener component during the preparation of said hardener H component before the dispersion of the hardener H in water.

15. Use of the composition according to any of claims 1 to 11 for coating of substrates, preferably a base metal and more preferably steel such as cold rolled steel and phosphate steel, to protect the substrate from corrosion.

## Patentansprüche

1. Zweikomponenten-Beschichtungszusammensetzung, umfassend eine Epoxidharz-E-Komponente mit einem Epoxidäquivalentgewicht von 100 bis 2.000, wobei das Epoxidäquivalentgewicht des Epoxidharzes als die Gramm an Epoxidharz (fest) äquivalent zu 1 mol Epoxidgruppen bestimmt wird, und eine Härtungsmittel-H-Komponente auf Aminbasis dafür, **dadurch gekennzeichnet, dass** die Zusammensetzung zusätzlich mindestens ein Zinksalz einer organischen aliphatischen Säure **Z** umfasst.

2. Zusammensetzung nach Anspruch 1, **dadurch gekennzeichnet, dass** sie in Form einer wässerigen Dispersion vorliegt.

3. Zusammensetzung nach Anspruch 1, **dadurch gekennzeichnet, dass** die Epoxidharz-E-Komponente oder/und die Härtungsmittel-H-Komponente in Form einer wässerigen Dispersion vorliegt/vorliegen.

4. Zusammensetzung nach einem der Ansprüche 1 bis 3, wobei das Zinksalz **Z** ein Salz einer organischen aliphatischen Säure ist, wobei die Säuregruppen aus der Gruppe ausgewählt sind, die aus Carbonsäuregruppen, Phosphonsäuregruppen, Phosphinsäuregruppen und Phosphorsäuregruppen besteht.

5. Zusammensetzung nach Anspruch 4, wobei die aliphatische Gruppe eine lineare oder verzweigte Alkylgruppe mit bis zu vierzig Kohlenstoffatomen ist.

6. Zusammensetzung nach Anspruch 4 oder 5, wobei die organische aliphatische Säure eine monofunktionelle Carbonsäure ist.

7. Zusammensetzung nach Anspruch 4, wobei das Zinksalz **Z** ein Zinksalz von Säuren, ausgewählt aus der Gruppe, bestehend aus 2-Ethylhexansäure, n-Octansäure, n-Decansäure, 8-Methylnonansäure und Neodecansäure, ist.

8. Zusammensetzung nach einem der Ansprüche 1 bis 7, wobei die Menge an Zinksalz in der Zusammensetzung derart ist, dass die Massefraktion von Zn zur Gesamtmasse an Epoxidharz E (fest) und Härtungsmittel H (fest) 0,01 bis 10 %, vorzugsweise 0,02 bis 2 % beträgt.

9. Zusammensetzung nach einem der Ansprüche 1 bis 8, wobei die Massefraktion von Zn in der Epoxidharz-E-Komponente oder/und in der Härtungsmittel-H-Komponente 0,01 bis 10 %, vorzugsweise 0,02 bis 5 % und stärker bevorzugt 0,02 % bis 4 % beträgt.

10. Zusammensetzung nach einem der Ansprüche 1 bis 9, wobei das Härtungsmittel H ein aminofunktionelles Epoxid-Amin-Addukt ist.

11. Zusammensetzung nach Anspruch 10, wobei das Härtungsmittel H ein aminofunktionelles Epoxid-Amin-Addukt mit primären Aminogruppen ist.

12. Verfahren zur Herstellung der Zusammensetzung nach einem der Ansprüche 1 bis 11, wobei der Epoxidharz-E-Komponente oder/und der Härtungsmittel-H-Komponente vor der Formulierung der Beschichtungszusammensetzung ein Zinksalz **Z** einer organischen aliphatischen Säure zugegeben wird.

13. Verfahren nach Anspruch 12, wobei das Zinksalz **Z** der Epoxidharz-E-Komponente während der Herstellung der Epoxidharz-E-Komponente vor der Dispersion des Epoxidharzes E in Wasser zugegeben wird.

14. Verfahren nach Anspruch 12 oder 13, wobei das Zinksalz **Z** der Härtungsmittelkomponente während der Herstellung der Härtungsmittel-H-Komponente vor der Dispersion des Härtungsmittels H in Wasser zugegeben wird.

15. Verwendung der Zusammensetzung nach einem der Ansprüche 1 bis 11 zur Beschichtung von Substraten, vorzugsweise eines Nichtedelmetalls und stärker bevorzugt Stahl, wie kaltgewalztem Stahl und Phosphatstahl, zum Schutz des Substrats vor Korrosion.

## Revendications

1. Composition de revêtement à deux composants comprenant un composant de type résine époxy E ayant un poids équivalent d'époxy de 100 à 2 000, le poids équivalent d'époxy de la résine époxy étant déterminé comme les grammes de résine époxy (solide) équivalents à 1 mole de groupes époxy, et un composant H de type agent de durcissement à base d'amine pour celui-ci, **caractérisée en ce que** la composition comprend de plus au moins un sel de zinc d'un acide aliphatique organique Z.

2. Composition selon la revendication 1, **caractérisée en ce qu'**elle est sous la forme d'une dispersion aqueuse.

3. Composition selon la revendication 1, **caractérisée en ce que** le composant de type résine époxy E ou/et le composant H de type agent de durcissement est/sont sous la forme d'une dispersion aqueuse.

4. Composition selon l'une quelconque des revendications 1 à 3, le sel de zinc Z étant un sel d'un acide aliphatique organique dans lequel les groupes de type acide sont choisis dans le groupe constitué par des groupes acide carboxylique, des groupes acide phosphonique, des groupes acide phosphinique et des groupes acide phosphorique.

5. Composition selon la revendication 4, le groupe aliphatique étant un groupe alkyle linéaire ou ramifié ayant jusqu'à quarante atomes de carbone.

6. Composition selon la revendication 4 ou 5 où l'acide aliphatique organique est un acide carboxylique monofonctionnel.

7. Composition selon la revendication 4, le sel de zinc Z étant un sel de zinc d'acides choisis dans le groupe constitué par l'acide 2-éthylhexanoïque, l'acide n-octanoïque, l'acide n-décanoïque, l'acide 8-méthyl-nonanoïque, et l'acide néodécanoïque.

8. Composition selon l'une quelconque des revendications 1 à 7, la quantité de sel de zinc dans la composition étant telle que la fraction massique de Zn sur la masse totale de résine époxy E (solide) et d'agent de durcissement H (solide) est de 0,01 à 10 %, préférablement de 0,02 à 2 %.

9. Composition selon l'une quelconque des revendications 1 à 8, la fraction massique de Zn dans le composant de type résine époxy E ou/et dans le composant de type agent de durcissement H étant de 0,01 à 10 %, préférablement de 0,02 à 5 %, et plus préférablement, de 0,02 % à 4 %.

10. Composition selon l'une quelconque des revendications 1 à 9, l'agent de durcissement H étant un adduit époxy-amine fonctionnalisé par amino.

11. Composition selon la revendication 10, l'agent de durcissement H étant un adduit époxy-amine fonctionnalisé par amino ayant des groupes amino primaire.

12. Procédé pour la préparation de la composition selon l'une quelconque des revendications 1 à 11, un sel de zinc Z d'un acide aliphatique organique étant ajouté au composant de type résine époxy E ou/et au composant de type agent de durcissement H avant la formulation de la composition de revêtement.

13. Procédé selon la revendication 12, le sel de zinc Z étant ajouté au composant de type résine époxy E pendant la préparation dudit composant de type résine époxy E avant la dispersion de la résine époxy E dans l'eau.

14. Procédé selon la revendication 12 ou 13, le sel de zinc Z étant ajouté au composant de type agent de durcissement pendant la préparation dudit composant de type agent de durcissement H avant la dispersion de l'agent de durcissement H dans l'eau.

15. Utilisation de la composition selon l'une quelconque des revendications 1 à 11 pour le revêtement de substrats, préférablement d'un métal de base et plus préférablement d'acier tel qu'un acier laminé à froid et un acier au phosphate, pour protéger le substrat contre la corrosion.
